# EUROPEAN PATENT SPECIFICATION

(11) **EP 2 846 022 B1**
(45) Date of publication and mention of the grant of the patent: **26.07.2017**
(21) Application number: 14181344.4
(22) Date of filing: 19.08.2014
(51) Int. Cl.: F02C 3/22, F02C 3/24, F02C 9/50, F02C 9/52, F02C 9/54, F02C 7/26, F01D 19/00, F23R 3/26, F23R 3/34, F23R 3/36

(54) **Gas turbine combustion system**
Gasturbinenverbrennungssystem
Système de combustion de turbine à gaz

(30) Priority: 30.08.2013 JP 2013180189
(43) Date of publication of application: 11.03.2015
(73) Proprietor: Mitsubishi Hitachi Power Systems, Ltd., Yokohama 220-8401 (JP)
(72) Inventor: Asai, Tomohiro, Yokohama, Kanagawa 220-8401 (JP); Hayashi, Akinori, Yokohama, Kanagawa 220-8401 (JP); Akiyama, Yasuhiro, Yokohama, Kanagawa 220-8401 (JP)
(74) Representative: MERH-IP Matias Erny Reichl Hoffmann Patentanwälte PartG mbB

(56) References cited:
- EP-A1- 2 568 141
- EP-A2- 1 816 327
- EP-A2- 2 423 600
- WO-A2-2011/064143
- US-A- 4 683 715
- US-A1- 2012 017 601

## Description

### BACKGROUND OF THE INVENTION

### 1. Field of the Invention

The present invention relates to a gas turbine combustion system.

### 2. Description of the Related Art

Researches are currently underway into an effective utilization of by-product gases, such as a coke oven gas produced as a by-product in iron works and an off-gas produced as a by-product in oil refineries, from the standpoints of, for example, reduction in power generation cost, effective utilization of resources, and prevention of global warming. In the integrated coal gasification combined cycle (IGCC) that generates power by gasifying coal as an abundantly available resource, measures are being studied that use a system for capturing and storing a carbon content in a gas fuel supplied to a gas turbine (carbon capture and storage (CCS)) to replace the carbon content in coal with hydrogen (H₂), thereby reducing a discharge amount of carbon dioxide (CO₂) (see, for example, JP-2013-139975-A).

US 4683715 A describes a method of starting a gas turbine plant. The plant has one combustor including a primary combustion chamber into which primary fuel nozzles open and a secondary combustion chamber into which secondary fuel nozzles open. Before the fuel supply to the secondary fuel nozzles is commenced, a part of the compressed air is bled through at least one air bleed pipe leading from the compressor and having an air bleed valve.

US 2012/0017601 A1 describes a gas turbine with sequential combustion. The air ratio of the operative burners of the second combustor is kept below a maximum air ratio at part load in order to reduce the maximum air. For engaging the second combustor, the row of variable compressor inlet guide vanes is quickly closed and fuel is introduced in a synchronized manner into the burner of the second combustor.

### SUMMARY OF THE INVENTION

A by-product gas, a coal-derived gas, or the like contains hydrogen. When such a gas fuel is used, an ignition failure can cause the gas fuel to be discharged unburned from a combustor, resulting in hydrogen being likely to enter a turbine. To prevent this from occurring, an operating method as follows may at times be employed: First, ignition is performed using a startup fuel not containing therein hydrogen (e.g. an oil fuel); Next, the fuel is switched under a partial load condition from the startup fuel to a gas fuel; Then, the number of burners that burns the gas fuel is then increased to thereby shift into a rated load condition. The IGCC plant also employs the above-described operating method in which a gas turbine is started using a startup fuel other than a coal-gasified gas, because a gasifier generates the coal-gasified gas using steam generated with gas turbine waste heat.

At timing immediately after a combustion mode is switched from a mode in which the gas fuel is burned with part of the burners (hereinafter, a partial combustion mode) to a mode in which the gas fuel is burned with all burners (hereinafter, a full combustion mode), however, a combustion area expands greatly relative to a rate of increase in a fuel flow rate; as a result, fuel concentration is temporarily reduced. While the fuel concentration is reduced, flame temperatures decrease to cause incomplete combustion of the gas fuel to occur, resulting in an increased discharge amount of unburned content such as CO and unburned hydrocarbon. In this case, the discharge amount of the unburned content may exceed environmental regulation values and, moreover, power output may be reduced.

It is an object of the present invention to provide a gas turbine combustion system capable of minimizing unburned content of a gas fuel under all load conditions from partial load to rated load.

The above explained object is achieved by the invention according to the independent claims. The dependent claims describe further preferred developments.

To achieve the foregoing object, arrangements according to an aspect of the present invention temporarily reduce a combustor inlet air flow rate from a reference flow rate to a set flow rate when a combustion mode is switched from a partial combustion mode in which a gas fuel is burned using part of a plurality of gas fuel burners to a full combustion mode in which the gas fuel is burned using all of the gas fuel burners.

### Effect of the Invention

The present invention can minimize the unburned content of the gas fuel under all load conditions from partial load to rated load. Thus, the discharge amount of, for example, CO and unburned hydrocarbon can be reduced even by using a gas fuel containing therein H₂ and CO.

### BRIEF DESCRIPTION OF THE DRAWINGS

The present invention will be described hereinafter with reference to the accompanying drawings.
Fig. 1 is an exemplary configuration diagram showing a gas turbine plant that incorporates a gas turbine combustion system according to a first embodiment of the present invention;
Fig. 2 is a graph showing changes in an IGV opening degree, a combustor inlet air flow rate, a fuel flow rate, a fuel air ratio, and a combustion gas temperature during a period of time from a gas turbine startup to a rated load condition;
Fig. 3 is a control block diagram showing steps performed by a control system incorporated in the gas turbine combustion system according to the first embodiment of the present invention to output a command signal to an air flow rate adjusting system;
Fig. 4 is a diagram showing a relational curve between a local flame temperature of a main burner outer region and an unburned content discharge amount;
Fig. 5 is a diagram showing a relation between a main burner outer flame temperature and gas fuel composition required to keep the unburned content discharge amount equal to, or below, a specified value;
Fig. 6 is a diagram showing changes in various amounts including the unburned content discharge amount relative to gas turbine load;
Fig. 7 is an exemplary configuration diagram showing a gas turbine plant that incorporates a gas turbine combustion system according to a second embodiment of the present invention; and
Fig. 8 is an exemplary configuration diagram showing a gas turbine plant that incorporates a gas turbine combustion system according to a third embodiment of the present invention.

### DESCRIPTION OF THE PREFERRED EMBODIMENTS

Preferred embodiments of the present invention will be described below with reference to the accompanying drawings.

A gas turbine combustor according to an embodiment of the present invention is suitable for burning a gas fuel that contains therein hydrogen as a composition component (hereinafter referred to as a hydrogen containing fuel), in addition to ordinary gas fuels. Specifically, the gas turbine combustor according to the embodiment of the present invention is suitably applicable to, as follows: the integrated coal gasification combined cycle plant that uses the hydrogen containing fuel obtained through gasification of coal; a gas turbine that uses as its fuel a coke oven gas (COG), a blast furnace gas (BFG), a linzer donawitz gas (LDG), which are produced as a by-product in iron works plants, or a mixed gas of the foregoing gases; or a gas turbine that uses a gas fuel containing hydrogen as a composition component (hydrogen containing fuel) such as a by-product gas obtained from, for example, naphtha cracking plants.

### (First embodiment)

### 1. Gas turbine plant

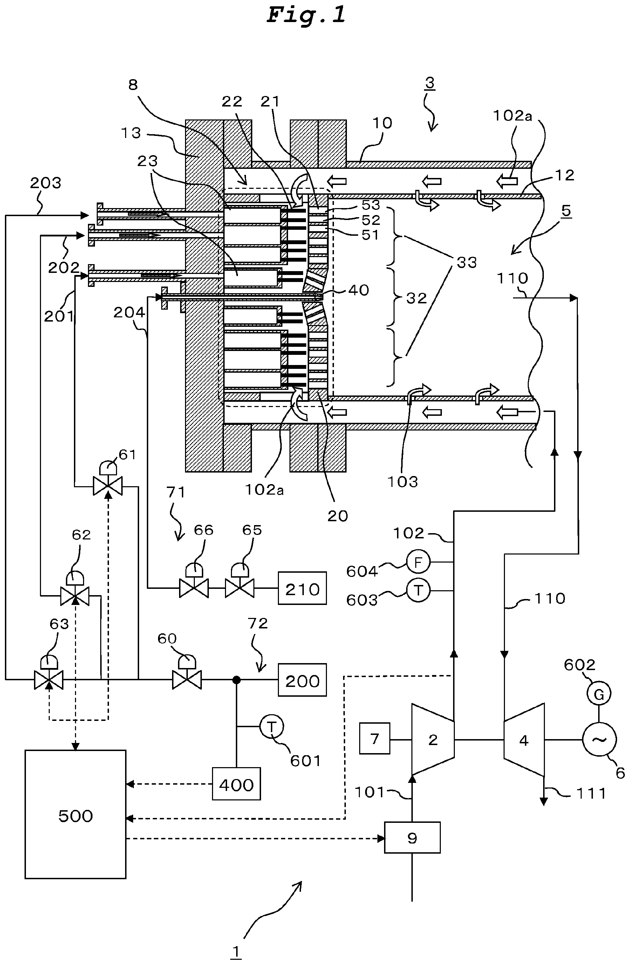

Fig. 1 is an exemplary configuration diagram showing a gas turbine plant that incorporates a gas turbine combustion system according to a first embodiment of the present invention.

The gas turbine plant 1 shown in Fig. 1 includes a gas turbine and a generator 6 driven by the gas turbine. The gas turbine includes a compressor 2, a gas turbine combustion system, and a turbine 4. The compressor 2, the turbine 4, and the generator 6 each have a rotor connected coaxially with each other. The gas turbine combustion system, including a combustor 3 as one of its main components, will be described later.

Operation of the gas turbine plant 1 is as follows. Specifically, air 101 drawn in from the atmosphere is compressed by the air compressor 2 and compressed air 102 is supplied to the combustor 3. The combustor 3 burns a gas fuel together with the compressed air 102 to thereby generate a combustion gas 110. The turbine 4 is driven by the combustion gas 110 generated by the combustor 3. The generator 6 is driven by rotatable driving power of the turbine 4, thereby generating electric power.

### 2. Gas turbine combustion system

The gas turbine combustion system includes the combustor 3, a liquid fuel supply system 71, a gas fuel supply system 72, an IGV 9, and a control system 500. Each of these components will be described in sequence below.

### Combustor

The combustor 3 includes an outer casing 10, a liner 12, a transition piece (not shown), and a burner 8. The outer casing 10 is a cylindrical member disposed on an outer peripheral portion of a turbine casing (not shown). The outer casing 10 has an end portion (a head portion) on a side opposite to the turbine 4 closed by an end cover 13. The liner 12 is a cylindrical combustor inner casing that forms a combustion chamber 5 thereinside. Disposed inside the outer casing 10, the liner 12 forms an annular air passage in a space between the liner 12 and the outer casing 10. The liner 12 has a plurality of air holes drilled therein. The combustion chamber 5 assumes a space formed by the liner 12 between the burner 8 and the transition piece. Fuel jetted by the burner 8 is burned with air 102a in the combustion chamber 5. The transition piece serves as a member that smoothly connects the line 12 to an inlet (an initial stator inlet) of a gas path of the turbine 4. Fuel dividers 23 that distribute fuel to the burner 8 are disposed at the end cover 13. The combustor 3 also has, though not shown, an ignitor that ignites a mixture of fuel and air in the combustion chamber 5. The gas turbine plant 1 includes a plurality of combustors 3, such as the combustor 3 as described above, disposed circumferentially at predetermined intervals on the outer peripheral portion of the turbine casing (not shown).

The burner 8 is disposed at the end cover 13 so as to be positioned between the end cover 13 and the combustion chamber 5. The burner 8 includes a plurality of element burners that comprise one pilot burner 32 disposed at a center of the combustor 3, surrounded by a plurality of main burners 33 disposed on the radial outside of the pilot burner 32.

Each of the main burners 33 is a gas fuel burner and includes an air hole plate 20 and a plurality of fuel nozzles 22. It is noted that the air hole plate 20 is connected to each of the air hole plates 20 of the main burners 33. The air hole plate 20 is disposed such that a main surface (a surface with the largest area) thereof faces the combustion chamber 5. The air hole plate 20 has a plurality of air holes 21 each extending from the end cover 13 in a direction toward the combustion chamber 5. The air 102a is jetted from each of these air holes 21 into the combustion chamber 5. Each of the fuel nozzles 22 is paired up with a corresponding one of the air holes 21 and extends from the fuel divider 23 so as to be coaxial with the corresponding one of air holes 21. Each of the fuel nozzles 22 may have a leading end inserted in the air hole 21 (positioned inside the air hole 21). The first embodiment of the present invention is, however, arranged such that the fuel nozzle 22 has the leading end facing an inlet of the air hole 21 (has the leading end positioned on the side of the end cover 13 away from the air hole plate 20). The gas fuel jetted from the fuel nozzle 22 is jetted via the corresponding air hole 21 paired up with the fuel nozzle 22 into the combustion chamber 5 together with the air 102a that passes through the air hole 21. In addition, in each of the main burners 33, air holes 21 are arranged concentrically in a plurality of rows (in this example, three rows) about each burner axis. The air hole rows are denoted as a first-row air hole 51, a second-row air hole 52, and a third-row air hole 53 in sequence from the center of each main burner 33 radially outwardly. It is noted that, in the description that follows, the term "main burner inner periphery", as used therein, refers to the first-row air hole 51 of each main burner 33 and the term "main burner outer periphery", as used therein, refers to the second-row air hole 52 and the third-row air hole 53.

The pilot burner 32 is a dual-fuel burner that burns both the gas fuel and a liquid fuel. The pilot burner 32 is disposed at the center of the main burners 33. Specifically, the pilot burner 32 comprises a gas fuel burner section and a liquid fuel burner section. The gas fuel burner section is similar in construction to the main burner 33, including an air hole plate and a plurality of fuel nozzles. The air hole plate has a plurality of air holes each being paired up with a corresponding one of the fuel nozzles. The gas fuel burner section differs from the main burner 33 in that the gas fuel burner section has two rows of air holes and that the air hole is inclined toward the side of the central axis of the combustor 3 toward the combustion chamber 5. The liquid fuel burner section includes a liquid fuel nozzle (e.g. an oil nozzle) 40. The liquid fuel burner section is disposed at the center of the gas fuel burner section (center of the air hole rows in the gas fuel burner section).

### Liquid fuel supply system

The liquid fuel supply system 71 supplies the liquid fuel to the liquid fuel nozzle 40 of the pilot burner 32. The liquid fuel supply system 71 includes a liquid fuel source 210, a shut-off valve 65, and a fuel control valve 66. The liquid fuel source 210 supplies an oil fuel such as gas oil, kerosene, or heavy oil A as the startup fuel. The liquid fuel source 210 is connected to the liquid fuel nozzle 40 via a line 204. The shut-off valve 65 and the fuel control valve 66 are disposed in the line 204. The shut-off valve 65 and the fuel control valve 66 are driven by signals from the control system 500 so as to be opened to varying degrees and closed.

### Gas fuel supply system

The gas fuel supply system 72 supplies the gas fuel to the gas fuel burner section of the pilot burner 32 and each of the main burners 33. The gas fuel supply system 72 includes a gas fuel source 200, a shut-off valve 60, and fuel control valves 61 to 63. The gas fuel source 200 supplies a fuel that contains hydrogen or carbon monoxide, such as the coke oven gas, the off-gas produced as a by-product in oil refineries, and the coal-gasified gas. The line through which the gas fuel is passed from the gas fuel source 200 is branched into three lines 201 to 203. The line 201 is connected to the fuel divider 23 of the gas fuel burner section of the pilot burner 32. The line 202 is connected to the fuel divider 23 of the main burner inner periphery of each main burner 33. The line 203 is connected to the fuel divider 23 of the main burner outer periphery of each main burner 33. The shut-off valve 60 is disposed in the line before the branch. The fuel control valves 61 to 63 are disposed in the lines 201 to 203, respectively. The shut-off valve 60 and the fuel control valves 61 to 63 are driven by signals from the control system 500 so as to be opened to varying degrees and closed. Opening or closing and adjusting the opening degree of the fuel control valves 61 to 63 varies the ratio of the gas fuel supplied to the pilot burner 32 and to the main burner outer periphery and the main burner inner periphery of each main burner 33.

Additionally, a gas measuring system 400 and a gas temperature measuring system 601 are disposed in the line between the gas fuel source 200 and the shut-off valve 60. The gas measuring system 400 measures composition and the heating value of the gas fuel supplied from the gas fuel source 200. In the first embodiment of the present invention, the gas measuring system 400 measures concentration of hydrogen, carbon monoxide, methane, carbon dioxide, and nitrogen and the heating value based on the measured values. The gas temperature measuring system 601 is exemplarily a thermocouple that measures temperature of the gas fuel. In the first embodiment, the gas temperature measuring system 601 is disposed midway in a line extending to the gas measuring system 400 from a point in the line between the gas fuel source 200 and the shut-off valve 60.

### IGV

The inlet guide vane (IGV) 9 assumes an inlet guide vane disposed at an inlet of the compressor 2. In the first embodiment of the present invention, the IGV 9 functions as an air flow rate adjusting system that adjusts the flow rate of air to be mixed with the gas fuel in the combustor 3. Varying the opening degree of the IGV 9 adjusts the flow rate of the air 101 drawn in the compressor 2. This results in the air flow rate supplied to the combustor 3 being adjusted.

### Control system

The control system 500 controls the shut-off valves 60, 65, the fuel control valves 61 to 63, 66, and the IGV 9 based on measurements taken by a power measuring system 602, an air temperature measuring system 603, an air flow rate measuring system 604, the gas temperature measuring system 601, and the gas measuring system 400. The control system 500 includes a storage that stores therein programs and data required for controlling the shut-off valves 60, 65, the fuel control valves 61 to 63, 66, and the IGV 9 and a storage that stores therein control histories (opening degree histories) of the shut-off valves 60, 65, the fuel control valves 61 to 63, 66, and the IGV 9. Specifically, when a combustion mode is switched from a partial combustion mode in which the gas fuel is burned using part of the gas fuel burners to a full combustion mode in which the gas fuel is burned using all of the gas fuel burners, the control system 500 outputs a signal to the IGV 9 to thereby temporarily reduce the air flow rate from a reference flow rate to a set flow rate.

The term "partial combustion mode" refers to a combustion mode in which the gas fuel is burned with at least one line of the lines 201 to 203 closed. Examples of the partial combustion mode include a condition in which the lines 202 and 203 are closed to thereby distribute the gas fuel only to the pilot burner 32 and a condition in which the line 203 is closed to thereby distribute the gas fuel only to the pilot burner 32 and the main burner inner periphery of each main burner 33. In contrast, the term "full combustion mode" refers to a combustion mode in which all of the lines 201 to 203 are open to thereby cause the gas fuel to be jetted from the pilot burner 32 and the main burner inner peripheries and the main burner outer peripheries of all main burners 33. Additionally, the term "reference flow rate" refers to a value set in consideration of preventing a surge and icing from occurring in the compressor 2 under the partial load condition. The term "set flow rate" refers to a value calculated by the control system 500 based on the composition and the temperature of the gas fuel measured with the gas measuring system 400 and the gas temperature measuring system 601, respectively, with the aim of minimizing a difference in a local fuel air ratio near a burner end face when the combustion mode is switched from the partial combustion mode to the full combustion mode.

### 3. Operation

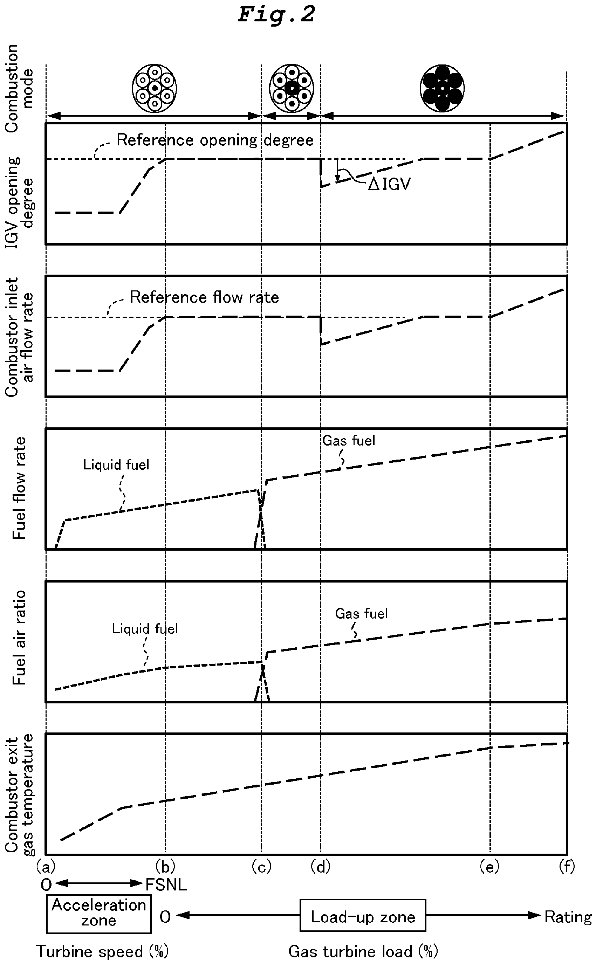

Fig. 2 is a graph showing changes in an IGV opening degree, a combustor inlet air flow rate, a fuel flow rate, a fuel air ratio, and a combustion gas temperature during a period of time from a gas turbine startup to a rated load condition. The sketches in the uppermost row of Fig. 2 show burners operated in different combustion modes by being filled with black.

The process from the startup to the rated load condition may generally be classified into six steps of (a) to (f) as specified below.
(a) Gas turbine startup
(b) Full speed no load (FSNL)
(c) Fuel changeover (from the liquid fuel to the gas fuel)
(d) Gas-fired combustion mode changeover (from the partial combustion mode to the full combustion mode)
(e) IGV opening degree increased through exhaust gas temperature control setting
(f) Rated load condition

Each of the above-referenced steps will be described below.

### (a) to (b): Gas turbine startup to FSNL

The control system 500 outputs a signal to a startup motor (not shown), so that the gas turbine can be started by the startup motor. When a gas turbine speed thereafter increases to a value that satisfies an ignition condition, the control system 500 outputs signals to the shut-off valve 65 and the fuel control valve 66 to thereby supply the liquid fuel nozzle 40 with the liquid fuel, thus igniting the combustor 3. An operating range from the gas turbine startup to loading start (power generation start) is called an acceleration zone. In the acceleration zone, the control system 500 outputs signals to the IGV 9 and the fuel control valve 66 and increases the opening degree of the fuel control valve 66 until the turbine speed reaches a predetermined value, while maintaining the opening degree of the IGV 9 at a constant value. This increases the fuel air ratio together with the fuel flow rate, and accordingly the gas temperature at the combustor exit increases.

When the turbine speed reaches the predetermined value, the control system 500 outputs a signal to the IGV 9 to thereby increase the opening degree of the IGV 9 to a reference opening degree. As the fuel flow rate thereafter increases, the gas turbine speed reaches the full speed no load (FSNL). When the air flow rate reaches a reference flow rate (the IGV opening degree reaches the reference opening degree), the control system 500 outputs a signal to the generator 6 to thereby start taking the load (start generating electric power).

The term "reference opening degree", as used herein, refers to the IGV opening degree for achieving the abovementioned reference flow rate. The "reference opening degree" is specified so that a surge or icing does not occur in the compressor 2 under the partial load condition. Surge is a phenomenon in which the compressor 2 operates erratically at any given pressure ratio involving pressure fluctuations occurring with sudden loud acoustics, severe pulsations of the air flow, and mechanical vibrations, when the pressure ratio of the compressor 2 is increased. Icing is a phenomenon in which, when the opening degree of the IGV 9 is reduced under a condition of a low ambient temperature, the liquid temperature decreases with an increasing exit speed (Mach number) of the IGV 9, causing moisture content in the atmosphere to freeze. When icing occurs, the solidified moisture content (block of ice) can collide with and damage vanes of the compressor 2.

### (b) to (c): FSNL to fuel changeover

When the FSNL is reached, the control system 500 causes the generator 6 to take load and the operation range is a load-up zone. In the load-up zone, the control system 500 maintains a constant opening degree of the IGV 9 (reference opening degree) and keeps the combustor inlet air flow rate constant (reference flow rate). During this time, the fuel flow rate increases with the load to thereby increase the fuel air ratio, which increases a combustor exit gas temperature. The load is increased and the specified partial load condition ((c) in Fig. 2) is reached at which the fuel is switched from the startup liquid fuel to the gas fuel.

### (c) to (d): Fuel changeover to gas-fired combustion mode changeover

When the specified partial load condition is reached, the control system 500 outputs signals to the shut-off valves 60, 65 and the fuel control valves 61, 62, 66 to thereby increase the flow rate of the gas fuel to the pilot burner 32 and the main burner inner periphery, while decreasing the flow rate of the liquid fuel, thereby changing the fuel from the liquid fuel to the gas fuel. The combustion mode after the changeover is the partial combustion mode using the pilot burner 32 and the main burner inner periphery only. In the operating range by the partial combustion mode, the control system 500 maintains the IGV opening degree at the reference opening degree and the combustor inlet air flow rate at the reference flow rate. During the operation in the partial combustion mode, the control system 500 increases the gas fuel flow rate in response to a load increase and the combustor exit gas temperature increases with the increasing fuel air ratio.

### (d) to (e): Gas-fired combustion mode changeover to IGV opening degree increase

When the specified partial load condition (d) to change over the combustion mode is reached, the control system 500 outputs signals to the fuel control valves 61 to 63 to thereby distribute the gas fuel to the main burner outer periphery in addition to the pilot burner 32 and the main burner inner periphery, thus changing the combustion mode from the partial combustion mode to the full combustion mode. To change the combustion mode to the full combustion mode, the control system 500 outputs a signal to the IGV 9 and reduces the IGV opening degree from the reference opening degree (only by ΔIGV) to the set opening degree, thereby temporarily decreasing the combustor inlet air flow rate. The control system 500 thereafter gradually returns the IGV opening degree from the set opening degree to the reference opening degree to thereby return the combustor inlet air flow rate to the reference flow rate. During this time, the control system 500 increases the gas fuel flow rate according as the load increases.

### (e) to (f): IGV opening degree increase to rated load condition

When the combustor exit gas temperature thereafter increases with the increasing load, the condition (e) is reached in which the turbine exhaust gas temperature exceeds a limit value. When the condition (e) is reached, the control system 500 increases the opening degree of the IGV 9 further from the reference opening degree and controls the combustor exit gas temperature to thereby keep the exhaust gas temperature equal to, or below, the limit value. With the load reaching 100%, the operating condition shifts to the rated load condition. Of the load-up zone, the range excluding the rated load condition (load 100%) is called a partial load range.

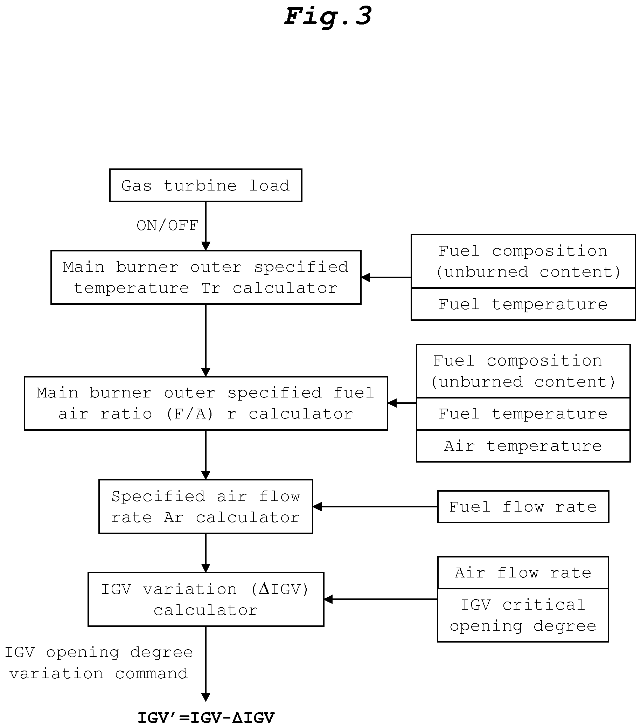

Reference is now made to Fig. 3 that is a control block diagram showing steps performed by the control system 500 to output a command signal to the air flow rate adjusting system.

The IGV opening degree needs to be reduced from the reference opening degree IGV0 to the set opening degree IGV' immediately after the combustion mode is switched from the partial combustion mode to the full combustion mode. The changeover of the combustion mode is triggered by the gas turbine load reaching the above condition (d). Thus, the control system 500, when having determined based on measurements taken by the power measuring system 602 that the gas turbine load reaches the condition (d), starts controlling an IGV opening degree variation command.

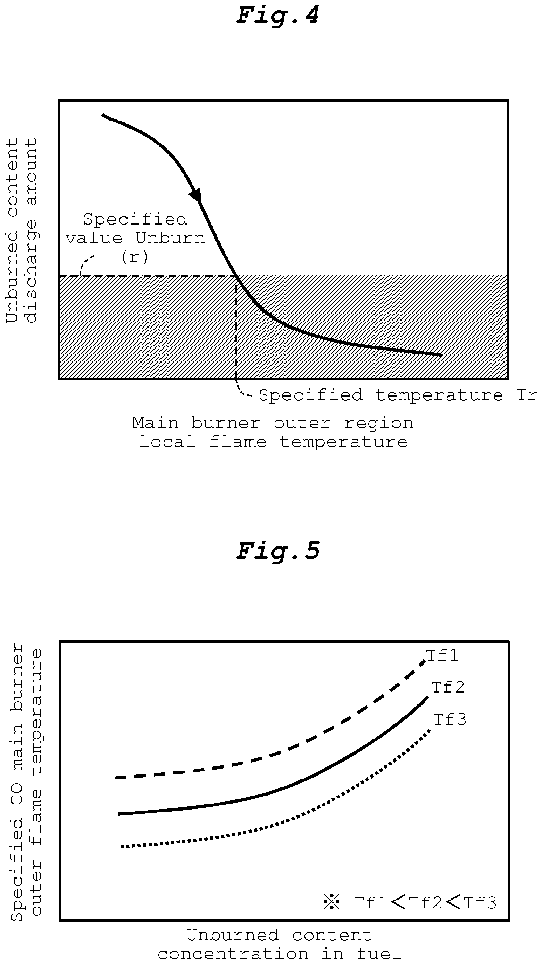

The control system 500, having started controlling the IGV opening degree variation command, inputs the concentration of the unburned content in the gas fuel measured by the gas measuring system 400 and the temperature of the gas fuel measured by the gas temperature measuring system 601. The concentration of the unburned content to be here input refers to concentration of a component to be controlled so as not to be discharged unburned from the combustor 3, specifically, to the concentration of hydrogen or carbon monoxide, but still including the concentration of methane, carbon dioxide, nitrogen, and the like. The control system 500 stores therein in advance a relational curve between a local flame temperature of a main burner outer region and an unburned content discharge amount (see Fig. 4). According to this relation, the control system 500 calculates a main burner outer region local flame temperature Tr that satisfies an unburned content discharge amount specified value Unburn(r), the calculation being based on the input value of the unburned content concentration. Strictly speaking, the specified flame temperature Tr varies depending on the fuel temperature, as well as depending on the concentration of the unburned content contained in the gas fuel. Fig. 5 is a diagram showing a relation between a main burner outer flame temperature and gas fuel composition required to keep the unburned content discharge amount equal to, or below, a specified value. As shown in Fig. 5, the higher the unburned content concentration of the gas fuel or the lower a fuel temperature Tf (Tf1 < Tf2 < Tf3), the higher the specified flame temperature Tr that satisfies the unburned content discharge amount specified value Unburn(r). Therefore, the control system 500 preferably stores therein in the form of a table the relation between the main burner outer region local flame temperature and the unburned content discharge amount for each fuel temperature so that the control system 500 can calculate the main burner outer region local flame temperature Tr based on the input values of the unburned content concentration and the fuel temperature.

Next, based on the current fuel composition, fuel temperature, and air temperature input from the gas measuring system 400, the gas temperature measuring system 601, and the air temperature measuring system 603, and the calculated main burner outer region local flame temperature Tr, the control system 500 calculates a local fuel air ratio (F/A)r in an area near the main burner outer periphery end face for achieving the main burner outer region local flame temperature Tr. Then, the control system 500 calculates an air flow rate Ar required for achieving the main burner outer region local flame temperature Tr from (F/A)r and the opening degree of the current gas fuel flow rate (fuel control valves 61 to 63).

Finally, the control system 500 compares Ar with the current air flow rate and calculates, based on the relation between the IGV opening degree and the air flow rate, a variation ΔIGV in the IGV opening degree. At this time, ΔIGV is limited by an IGV critical opening degree (a minimum reduction amount) in order to avoid occurrence of a surge or icing occurring due to an excessive reduction in the IGV opening degree. The control system 500 then calculates, based on the calculated ΔIGV, a command value that results in the IGV opening degree being the set opening degree IGV' (= IGV0 - ΔIGV) and outputs a command signal to the IGV 9. This causes the opening degree of the IGV 9 to be reduced to the set opening degree IGV', so that the air flow rate is reduced to the set flow rate. The control system 500 thereafter repeatedly performs the steps shown in Fig. 3. Through the repeated performance of the steps shown in Fig. 3, the fuel air ratio in the main burner outer region increases and the calculated set opening degree IGV' gradually approaches the reference opening degree IGV0. Specifically, the set opening degree IGV' does not remain constant. When the IGV opening degree returns to the reference opening degree IGV0 as a result of the control of the IGV opening degree, the control system 500 terminates the process of Fig. 3. The control system 500 then increases the fuel flow rate, while maintaining the IGV opening degree at the reference opening degree IGV0, and increases the IGV opening degree by way of the condition (e) as described earlier to thereby shift to the rated load condition.

### 4. Effects

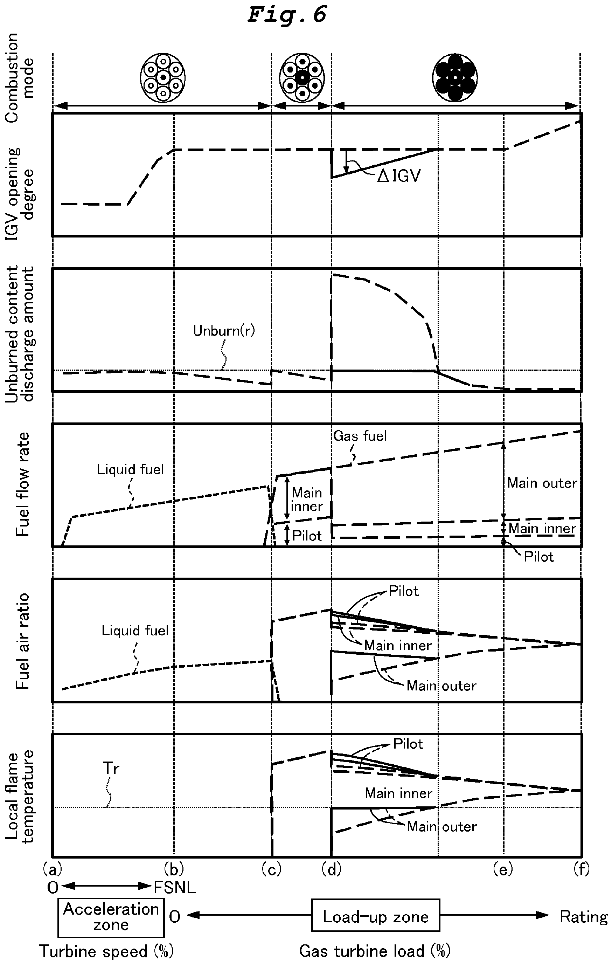

Fig. 6 is a diagram showing changes in various amounts including the unburned content discharge amount relative to gas turbine load. Fig. 6 also shows, for comparison purposes, a case in which the combustor inlet air flow rate is maintained at the reference flow rate when the combustion mode is shifted to the full combustion mode. In Fig. 6, operations common to the first embodiment and the case being compared are indicated by the broken line, while those unique to the first embodiment changing differently from the case being compared are indicated by the solid line. Fig. 6 shows changes in the IGV opening degree, the unburned content discharge amount, the fuel flow rate, the fuel air ratio, and the local flame temperature at each burner region for the period of time from the startup of the gas turbine to the rated load condition.

First, attention is focused on the case in which the combustor inlet air flow rate is maintained at the reference flow rate when the combustion mode is shifted to the full combustion mode. Fig. 6 shows that the unburned content discharge amount increases sharply when the gas-fired combustion mode is switched from the partial combustion mode to the full combustion mode (d). The unburned content discharge amount remains for some while thereafter large, though decreasing at a mild pace with increasing load, and may exceed an environmental regulation value. As the load further increases thereafter, the unburned content discharge amount starts decreasing under a certain condition and thereafter remains small before reaching the rated load condition.

The following is a possible reason for the increase in the unburned content discharge amount when the reference flow rate is maintained upon the shift to the full combustion mode. Specifically, when the combustion mode is switched to the full combustion mode, the fuel flow rate is distributed to each burner substantially at the rate shown in Fig. 6. As shown in Fig. 6, the fuel air ratio of the main burner outer region at timing soon after the start of fuel supply is lower than that of the pilot burner and the main burner inner periphery, and the main burner outer region local flame temperature remains lower than others for some while. As a result, the gas fuel jetted from the main burner outer periphery is not completely burned; part of the gas fuel is discharged as unburned fuel. Additionally, the gas fuel, because of CO contained therein, tends to discharge unburned content more than commonly used fuels, such as natural gas, do. When the load increases, the fuel flow rate increases. When the main burner outer region local flame temperature increases to a level (T0 in Fig. 6) or higher, the gas fuel starts to burn completely even in the main burner outer region, which reduces the unburned content discharge amount.

In contrast, in the first embodiment of the present invention, when the combustion mode is shifted to the full combustion mode, the IGV opening degree is adjusted to reduce the air flow rate as indicated by the solid line in Fig. 6. This maintains the main burner outer region local flame temperature at Tr or higher to thereby reduce the unburned content discharge amount. Thus, even when the gas fuel that contains H₂ and CO is used, the unburned content of the gas fuel can be prevented from being discharged under all load conditions from partial load to rated load. Thus, the unburned content discharge amount can be prevented from exceeding the environmental regulation value and electric power output can be prevented from being reduced.

The gas fuel in the first embodiment of the present invention contains as its main components hydrogen (H₂) and carbon monoxide (CO) and exhibits a burning speed faster than that of the natural gas (containing methane as its main component) commonly used in gas turbines. This results in flame at high temperatures being formed in an area near the burner end face inside the combustion chamber 5. Considering such a characteristic, the first embodiment of the present invention employs a burner configuration that includes a plurality of pairs of fuel nozzles 22 and air holes 21. Fuel streams covered in air flows via the air holes 21 are jetted into the combustion chamber 5, thereby mix fuel and air with each other through a sudden expansion of flow passage. This enables uniform combustion of the gas fuel in the combustion chamber, while enhancing dispersion of the fuel. The flame at high temperatures can thereby be prevented from being formed and a burner metal temperature can be prevented from increasing. The arrangement also contributes to reduction in a NOx discharge amount.

The set opening degree IGV' that can keep the unburned content discharge amount at Unburn(r) is calculated based on the measurements taken by the gas measuring system 400 and the gas temperature measuring system 601. This allows the unburned content discharge amount to be reduced reasonably.

The ratio of the gas fuel supplied to each burner zone can be varied using the fuel control valves 61 to 63. Thus, by increasing the fuel flow rate in the main burner outer region, the main burner outer region local flame temperature can be efficiently increased to thereby efficiently reduce the unburned content discharge amount. The foregoing further contributes to prevention of uneven fuel flow rate.

The pilot burner 32 disposed at the center of the main burners 33 is a dual-fuel burner that burns both the gas fuel and the liquid fuel. This allows fuel to be jetted from an area near the burner center even after the fuel has been switched to the gas fuel, thus maintaining homogeneity of combustion.

### (Second embodiment)

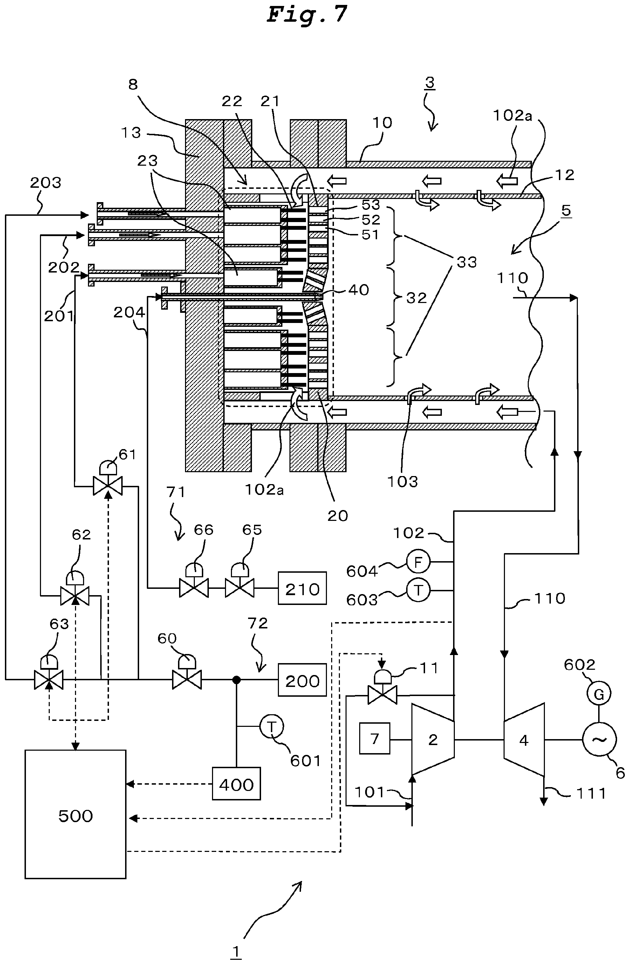

Fig. 7 is an exemplary configuration diagram showing a gas turbine plant that incorporates a gas turbine combustion system according to a second embodiment of the present invention. In Fig. 7, like or corresponding parts are identified by the same reference numerals as those used in the first embodiment of the present invention and descriptions for those parts will not be duplicated.

The second embodiment of the present invention differs from the first embodiment in that a bleed adjusting valve 11 of an inlet bleed heat (IBH) system that returns the compressed air 102 compressed by the compressor 2 to the inlet of the compressor 2 constitutes the air flow rate adjusting system. The IBH system increases the temperature of the compressed air 102 and reduces the air flow rate by returning part of the compressed air 102 to the inlet of the compressor 2. The IBH system achieves an effect equivalent to that achieved by the IGV. The bleed adjusting valve 11 adjusts the flow rate returning to the inlet of the compressor 2. The second embodiment is configured such that the control system 500 adjusts the opening degree of the bleed adjusting valve 11, instead of the IGV 9. The opening degree of the bleed adjusting valve 11 is controlled so as to adjust the combustor inlet air flow rate as shown in Fig. 2. The second embodiment is otherwise configured similarly to the first embodiment.

As with the first embodiment, the second embodiment also allows the flow rate of the compressed air 102 to be reduced by increasing the opening degree of the bleed adjusting valve 11 when the combustion mode is shifted to the full combustion mode. Thus, the second embodiment achieves the same effects as those achieved by the first embodiment.

### (Third embodiment)

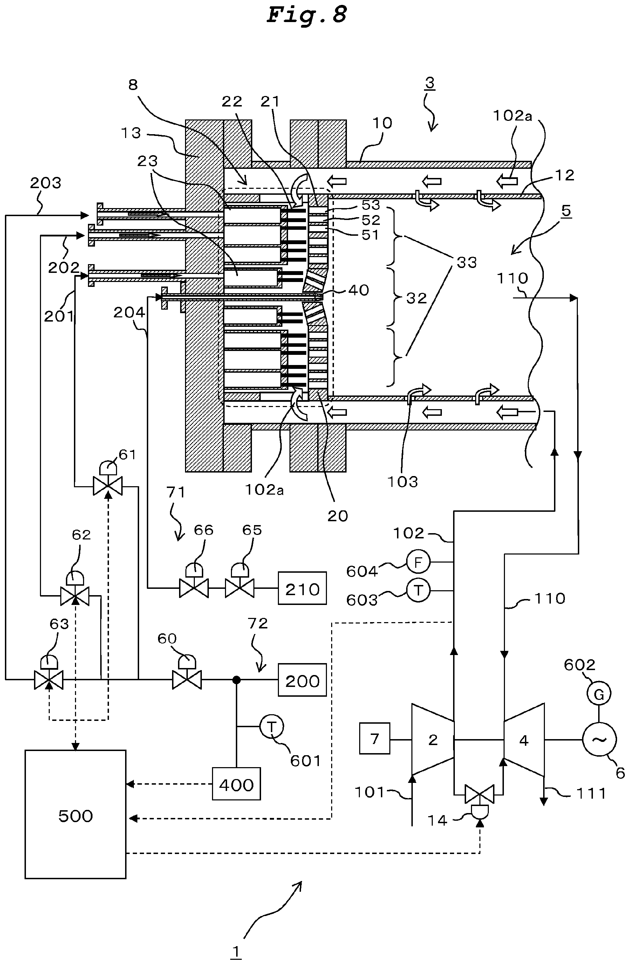

Fig. 8 is an exemplary configuration diagram showing a gas turbine plant that incorporates a gas turbine combustion system according to a third embodiment of the present invention. In Fig. 8, like or corresponding parts are identified by the same reference numerals as those used in the first embodiment of the present invention and descriptions for those parts will not be duplicated.

The third embodiment of the present invention differs from the first and second embodiments in that a bleed adjusting valve 14 constitutes the air flow rate adjusting system, the bleed adjusting valve 14 being disposed in a bypass system that bypasses air bled from the compressor 2 to the turbine 4. The bypass system bleeds part of the compressed air as cooling air for cooling parts that are hot in the turbine 4. The combustor inlet air flow rate can be controlled as shown in Fig. 2 by adjusting the opening degree of the bleed adjusting valve 14. An IGV 9 or an IBH, though not shown in Fig. 8, may be disposed in the gas turbine according to the third embodiment. In this case, in the partial load operation, the opening degree of the IGV 9 or the bleed adjusting valve 11 is maintained at the reference opening degree in the operating zone by the partial combustion mode and the full combustion mode. The bleed adjusting valve 14 is controlled as a device for reducing the combustor inlet air flow rate from the reference flow rate IGV0 to the set flow rate IGV'. The third embodiment is otherwise configured similarly to the first or second embodiment.

In the third embodiment, too, similar effects as those achieved by the first or second embodiment can be achieved. In addition, the combustor inlet air flow rate is reduced when the combustion mode is shifted to the full combustion mode so that the turbine cooling air flow rate increases at timing at which the burner zone local flame temperature increases. This reduces a pace at which the metal temperature increases.

### (Miscellaneous)

Each of the first to third embodiments of the present invention has been exemplarily described for a case in which the present invention is applied to the gas turbine combustion system that uses the gas fuel containing as its main components hydrogen (H₂) and carbon monoxide (CO), such as the coke oven gas, the off-gas produced as a by-product in oil refineries, and the coal-gasified gas. Understandably, other type of gas fuel including the natural gas can be used as the gas fuel. Additionally, although the embodiments have been exemplarily described for a case in which the liquid fuel is used as the startup fuel, a gas fuel such as natural gas or propane may even be used for the startup fuel. In this case, the pilot burner does not necessarily have to be a dual burner.

The embodiments have been exemplarily described for a case in which the present invention is applied to the gas turbine combustion system having a burner configuration that includes a plurality of pairs of fuel nozzles 22 and air holes 21 and a plurality of fuel streams covered in air flows via the air holes 21 is jetted into the combustion chamber 5. Nonetheless, the present invention can be applied also to a gas turbine combustion system including a main burner operating on another combustion system, such as a common premixed combustion system burner.

In addition, an arrangement has been exemplified in which the set flow rate is calculated based on the input signals from the gas measuring system 400 and the gas temperature measuring system 601 and the combustor inlet air flow rate is reduced from the reference flow rate to the set flow rate. The set flow rate may nonetheless be controlled along a predetermined operating line. In that sense, the set flow rate does not necessarily have to be calculated based on the input signals from the gas measuring system 400 and the gas temperature measuring system 601 when the combustion mode is switched to the full combustion mode. Moreover, values measured by the gas measuring system 400 and the gas temperature measuring system 601 may still be used as a basis for calculating the set flow rate. Further, the input value from, for example, the power measuring system 602, the air temperature measuring system 603, and the air flow rate measuring system 604 does not necessarily have to be used as the basis for calculating the set flow rate.

The embodiments have been described for a case in which the present invention is applied to a one-shaft simple-cycle gas turbine. Nonetheless, the present invention can also be applied to a gas turbine operating on another operating principle, such as a two-shaft gas turbine, a combined cycle power generating system, advanced humid air turbine (AHAT), and a regenerative cycle gas turbine that heats compressor outlet air with turbine exhaust gas.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A combustion system for a gas turbine, the combustion system configured to burn fuel with air compressed by a compressor (2) in its combustion chamber (5) and to generate a combustion gas that drives a turbine (4), the combustion system comprising:
a plurality of gas fuel burners (32, 33); and
an air flow rate adjusting system configured to adjust a flow rate of air to be mixed with a gas fuel;
the combustion system **characterized by** a gas measuring system (400) configured to measure the unburned content in the gas fuel;
a gas temperature measuring system (601) configured to measure temperature of the gas fuel; and
a control system (500) configured to temporarily reduce the air flow rate from a reference flow rate to a set flow rate by calculating a command value for the air flow rate adjusting system based on the unburned content in the gas fuel measured by the gas measuring system (400) and the temperature of the gas fuel measured by the gas temperature measuring system (601), and outputting a signal to the air flow rate adjusting system when a combustion mode is switched from a partial combustion mode in which the gas fuel is burned with part of the gas fuel burners to a full combustion mode in which the gas fuel is burned with all of the gas fuel burners (32, 33) and configured to, during this time, increase a gas fuel flow rate in accordance with a load increase.

2. The combustion system according to claim 1, wherein the reference flow rate is set in consideration of preventing a surge and icing from occurring in the compressor (2) under the partial load condition.

3. The combustion system according to claim 1 or 2, wherein the air flow rate adjusting system comprises an inlet guide vane (9) of the compressor (2).

4. The combustion system according to at least one of claims 1 to 3, wherein each of the gas fuel burners (32, 33) includes:
an air hole plate (20) disposed to face the combustion chamber (5), the air hole plate (20) having a plurality of air holes (21) formed therein; and
a plurality of fuel nozzles (22), each of the fuel nozzles (22) being associated with a corresponding one of the air holes (21) and supplying the gas fuel to the combustion chamber (5) via the corresponding air hole (21).

5. The combustion system according to at least one of claims 1 to 4, further comprising:
a gas fuel system capable of varying a ratio of the gas fuel supplied to the gas fuel burners (32, 33).

6. The combustion system according to at least one of claims 1 to 5, further comprising:
a dual burner disposed at a center of the gas fuel burners (32, 33), the dual burner burning both the gas fuel and a liquid fuel.

7. A gas turbine plant (1), comprising:
the compressor (2);
the combustion system according to at least one of claims 1 to 6;
the turbine (4) and
a generator (6) driven by rotatable driving power of the turbine.

8. The gas turbine plant (1) according to claim 7, wherein the gas turbine comprises an inlet bleed heat system that returns air compressed by the compressor (2) to an inlet of the compressor (2), and the air flow rate adjusting system comprises a bleed adjusting valve (11) of the inlet bleed heat system.

9. The gas turbine plant (1) according to at least one of claims 7 and 8, wherein the gas turbine comprises a bypass system that bypasses air bled from the compressor (2) to the turbine (4), and the air flow rate adjusting system comprises a bleed adjusting valve (11) of the bypass system.

10. A method for operating a combustion system according to at least one of claims 1 to 6, the method charcterized by:
when a combustion mode is switched from a partial combustion mode in which the gas fuel is burned with part of the gas fuel burners (32, 33) to a full combustion mode in which the gas fuel is burned with all of the gas fuel burners (32, 33), temporarily reducing an air flow rate from a reference flow rate to a set flow rate by calculating a command value for the air flow rate adjusting system based on the unburned content in the gas fuel measured by the gas measuring system (400) and the temperature of the gas fuel measured by the gas temperature measuring system (601), outputting a signal to the air flow rate adjusting system, and operating the air flow rate adjusting system and, during this time, increasing a gas fuel flow rate in accordance with a load increase.

11. The method for operating a gas turbine combustion system according to claim 10, further comprising:
setting the reference flow rate in consideration of preventing a surge and icing from occurring in the compressor (2) under the partial load condition.

## Patentansprüche

1. Verbrennungssystem für eine Gasturbine, wobei das Verbrennungssystem konfiguriert ist, Brennstoff mit Luft, die von einem Verdichter (2) verdichtet wird, in seiner Brennkammer (5) zu verbrennen und ein Verbrennungsgas, das eine Turbine (4) antreibt, zu erzeugen, wobei das Verbrennungssystem Folgendes umfasst:
mehrere Gasbrennstoffbrenner (32, 33); und
ein System zum Einstellen einer Luftdurchflussmenge, das konfiguriert ist, eine Durchflussmenge von Luft, die mit einem Gasbrennstoff gemischt werden soll, einzustellen;
wobei das Verbrennungssystem **gekennzeichnet ist durch**
ein Gasmesssystem (400), das konfiguriert ist, den unverbrannten Gehalt in dem Gasbrennstoff zu messen;
ein Gastemperaturmesssystem (601), das konfiguriert ist, die Temperatur des Gasbrennstoffs zu messen; und
ein Steuersystem (500), das konfiguriert ist, die Luftdurchflussmenge von einer Referenzdurchflussmenge auf eine eingestellte Durchflussmenge zu verringern, durch Berechnen eines Befehlswertes für das System zum Einstellen einer Luftdurchflussmenge basierend auf dem unverbrannten Gehalt in dem Gasbrennstoff, der von dem Gasmesssystem (400) gemessen worden ist, und der Temperatur des Gasbrennstoffs, die von dem Gastemperaturmesssystem (601) gemessen worden ist, und durch Ausgeben eines Signals an das System zum Einstellen einer Luftdurchflussmenge, wenn ein Verbrennungsmodus von einem Modus mit teilweiser Verbrennung, in dem der Gasbrennstoff mit einem Teil der Gasbrennstoffbrenner verbrannt wird, in einen Modus mit vollständiger Verbrennung, in dem der Gasbrennstoff mit allen Gasbrennstoffbrennern (32, 33) verbrannt wird, geschaltet wird, und konfiguriert ist, während dieser Zeit eine Gasbrennstoffdurchflussmenge in Übereinstimmung mit einer Lastzunahme zu erhöhen.

2. Verbrennungssystem nach Anspruch 1, wobei die Referenzdurchflussmenge unter Berücksichtigung des Verhinderns, dass unter der Teillastbedingung Druckanstieg und Eisbildung in dem Verdichter (2) auftreten, eingestellt ist.

3. Verbrennungssystem nach Anspruch 1 oder 2, wobei das System zum Einstellen einer Luftdurchflussmenge eine Eintrittsleitschaufel (9) des Verdichters (2) umfasst.

4. Verbrennungssystem nach mindestens einem der Ansprüche 1 bis 3, wobei jeder der Gasbrennstoffbrenner (32, 33) Folgendes umfasst:
eine Luftlochplatte (20), die so angeordnet ist, dass sie der Brennkammer (5) gegenüber liegt, wobei die Luftlochplatte (20) mehrere Luftlöcher (21) aufweist, die darin gebildet sind; und
mehrere Brennstoffdüsen (22), wobei jede der Brennstoffdüsen (22) einem entsprechenden Luftloch (21) zugeordnet ist und der Brennkammer (5) über das entsprechende Luftloch (21) Gasbrennstoff zuführt.

5. Verbrennungssystem nach mindestens einem der Ansprüche 1 bis 4, das ferner Folgendes umfasst:
ein Gasbrennstoffsystem, das ein Verhältnis des den Gasbrennstoffbrennern (32, 33) zugeführten Gasbrennstoffs zu variieren.

6. Verbrennungssystem nach mindestens einem der Ansprüche 1 bis 5, das ferner Folgendes umfasst:
einen Doppelbrenner, der in einer Mitte des Gasbrennstoffbrenners (32, 33) angeordnet ist, wobei der Doppelbrenner sowohl Gasbrennstoff als auch einen flüssigen Brennstoff verbrennt.

7. Gasturbinenanlage (1), die Folgendes umfasst:
den Verdichter (2);
das Verbrennungssystem nach mindestens einem der Ansprüche 1 bis 6;
die Turbine (4); und
einen Generator (6), der durch eine drehbare Antriebsleistung der Turbine angetrieben wird.

8. Gasturbinenkraftwerk (1) nach Anspruch 7, wobei die Gasturbine ein Entnahmewärme-Einlassvorwärmungssystem umfasst, das von dem Verdichter (2) verdichtete Luft zu einem Einlass des Verdichters (2) zurückführt, und das System zum Einstellen einer Luftdurchflussmenge ein Entlüftungs-Einstellventil (11) des Entnahmewärme-Einlassvorwärmungssystems umfasst.

9. Gasturbinenanlage (1) nach mindestens einem der Ansprüche 7 und 8, wobei die Gasturbine ein Umleitungssystem umfasst, das aus dem Verdichter (2) entnommene Luft zu der Turbine (4) umleitet, und das System zum Einstellen einer Luftdurchflussmenge ein Entlüftungs-Einstellventil (11) des Umleitungssystems umfasst.

10. Verfahren zum Betreiben eines Verbrennungssystems nach mindestens einem der Ansprüche 1 bis 6, wobei das Verfahren **gekennzeichnet ist durch**:
das zeitweilige Verringern einer Luftdurchflussmenge von einer Referenzdurchflussmenge auf eine eingestellte Durchflussmenge **durch** Berechnen eines Befehlswertes für das System zum Einstellen einer Luftdurchflussmenge basierend auf dem unverbrannten Gehalt in dem Gasbrennstoff, der von dem Gasbrennstoffmesssystem (400) gemessen wird, und der Temperatur des Gasbrennstoffs, der von dem Gastemperaturmesssystem (601) gemessen wird, und **durch** Ausgeben eines Signals zu dem System zum Einstellen einer Luftdurchflussmenge, und **durch** Betreiben des Systems zum Einstellen einer Luftdurchflussmenge und während dieser Zeit Erhöhen einer Gasdurchflussmenge in Übereinstimmung mit einer Lastzunahme, wenn ein Verbrennungsmodus von einem Modus mit teilweiser Verbrennung, in dem der Gasbrennstoff mit einem Teil der Gasbrennstoffbrenner (32, 33) verbrannt wird, in einen Modus mit vollständiger Verbrennung, in dem der Gasbrennstoff mit allen Gasbrennstoffbrennern (32, 33) verbrannt wird, geschaltet wird.

11. Verfahren zum Betreiben eines Gasturbinenverbrennungssystems nach Anspruch 10, das ferner Folgendes umfasst:
Einstellen der Referenzdurchflussmenge unter Berücksichtigung des Verhinderns, dass unter der Teillastbedingung Druckanstieg und Eisbildung in dem Verdichter (2) auftreten.

## Revendications

1. Système de combustion pour une turbine à gaz, le système de combustion étant configuré pour brûler un carburant avec de l'air comprimé par un compresseur (2) dans sa chambre de combustion (5) et pour générer un gaz de combustion qui entraîne une turbine (4), le système de combustion comprenant :
une pluralité de brûleurs à carburant gazeux (32, 33) ; et
un système d'ajustement de débit d'air configuré pour ajuster un débit d'air à mélanger avec un carburant gazeux ;
le système de combustion étant **caractérisé par**
un système de mesure de gaz configuré pour mesurer la teneur non brûlée dans le carburant gazeux ;
un système de mesure de température de gaz (601) configuré pour mesurer la température du carburant gazeux ; et
un système de commande (500) configuré pour réduire temporairement le débit d'air depuis un débit de référence jusqu'à un débit fixé en calculant une valeur d'ordre pour le système d'ajustement de débit d'air sur la base de la teneur non brûlée dans le carburant gazeux mesurée par le système de mesure de gaz (400) et la température du carburant gazeux mesurée par le système de mesure de température de gaz (601) et en délivrant un signal au système d'ajustement de débit d'air quand un mode de combustion est commuté depuis un mode de combustion partielle dans lequel le carburant gazeux est amené à brûler avec une partie des brûleurs à carburant gazeux vers un mode de combustion totale dans lequel le carburant gazeux est amené à brûler avec tous les brûleurs à carburant gazeux (32, 33) et configuré pour, pendant ce temps, augmenter un débit de carburant gazeux en accord avec une augmentation de la charge.

2. Système de combustion selon la revendication 1, dans lequel le débit de référence est fixé en considération d'empêcher l'apparition d'une surcharge et la formation de glace dans le compresseur (2) sous la condition de charge partielle.

3. Système de combustion selon la revendication 1 ou 2, dans lequel le système d'ajustement de débit d'air comprend une aube de guidage d'entrée (9) du compresseur (2).

4. Système de combustion selon l'une au moins des revendications 1 à 3, dans lequel chacun des brûleurs à carburant gazeux (32, 33) inclut :
une plaque à trous d'air (20) disposée en face de la chambre de combustion (5), la plaque à trous d'air (20) ayant une pluralité de trous d'air (21) formés en elle-même; et
une pluralité de buses à carburant (22), chacune des buses à carburant (22) étant associée avec un trou d'air correspondant parmi les trous d'air (21) et alimentant le carburant gazeux à la chambre de combustion (5) via le trou d'air correspondant (21).

5. Système de combustion selon l'une au moins des revendications 1 à 4, comprenant en outre :
un système à carburant gazeux capable de faire varier un rapport du carburant gazeux alimenté au brûleur de carburant gazeux (32, 33).

6. Système de combustion selon l'une au moins des revendications 1 à 5, comprenant en outre :
un brûleur double disposé à un centre des brûleurs de carburant gazeux (32, 33), le brûleur double amenant à brûler à la fois le carburant gazeux et un carburant liquide.

7. Installation de turbine à gaz (1), comprenant :
le compresseur (2) ;
le système de combustion selon l'une au moins des revendications 1 à 6 ;
la turbine (4) et
un générateur (6) entraîné par la puissance d'entraînement en rotation de la turbine.

8. Installation de turbine à gaz (1) selon la revendication 7, dans laquelle la turbine à gaz comprend un système thermique de purge d'entrée qui ramène l'air comprimé par le compresseur (2) à une entrée du compresseur (2), et le système d'ajustement de débit d'air comprend une valve d'ajustement de purge (11) du système thermique de purge d'entrée.

9. Installation de turbine à gaz (1) selon l'une au moins des revendications 7 et 8, dans lequel la turbine à gaz comprend un système de by-pass qui by-passe l'air purgé hors du compresseur (2) vers la turbine (4), et le système d'ajustement de débit d'air comprend une valve d'ajustement de purge (11) du système de by-pass.

10. Procédé pour le fonctionnement d'un système de combustion selon l'une au moins des revendications 1 à 6, le procédé étant **caractérisé en ce que** :
quand un mode de combustion est commuté depuis un mode de combustion partielle dans lequel le carburant gazeux est amené à brûler avec une partie des brûleurs à carburant gazeux (32, 33) vers un mode à combustion complète dans lequel le carburant gazeux est amené à brûler avec tous les brûleurs à carburant gazeux (32, 33), on réduit temporairement un débit d'air depuis un débit de référence jusqu'à un débit fixé en calculant une valeur d'ordre pour le système d'ajustement de débit d'air sur la base de la teneur non brûlée dans le carburant gazeux mesurée par le système de mesure de gaz (400) et de la température du carburant gazeux mesurée par le système de mesure de température de gaz (601),
on délivre un signal au système d'ajustement de débit d'air, et on fait fonctionner le système d'ajustement de débit d'air et, pendant ce temps, on augmente un débit de carburant gazeux en accord avec une augmentation de la charge.

11. Procédé pour le fonctionnement d'un système de combustion de turbine à gaz selon la revendication 10, comprenant en outre :
l'opération consistant à fixer le débit de référence en considération d'empêcher l'apparition d'une surcharge et la formation de glace dans le compresseur (2) sous la condition à charge partielle.
